# EUROPÄISCHE PATENTSCHRIFT

(11) **EP 0 371 378 B1**
(45) Veröffentlichungstag und Bekanntmachung des Hinweises auf die Patenterteilung: **12.05.1993**
(21) Anmeldenummer: 89121532.9
(22) Anmeldetag: 21.11.1989
(51) Int. Cl.: C09D 5/00, C09D 139/00, C09D 133/14, C09D 133/24, B08B 17/04

(54) **Temporäre Beschichtung von Lackierkabinen**
Temporary coating of spraying booths
Revêtement temporaire pour cabines de peinture

(30) Priorität: 26.11.1988 DE 3839935
(43) Veröffentlichungstag der Anmeldung: 06.06.1990
(73) Patentinhaber: Henkel Kommanditgesellschaft auf Aktien, 40191 Düsseldorf (DE)
(72) Erfinder: Schieferstein, Ludwig, Dr., D-4030 Ratingen 1 (DE); Geke, Jürgen, Dr., D-4000 Düsseldorf 1 (DE); Conradi, Joachim, D-4000 Düsseldorf 13 (DE); Meyer, Dieter, D-4000 Düsseldorf 13 (DE)

(56) Entgegenhaltungen:
- EP-A- 0 082 931

## Beschreibung

Die Erfindung betrifft den Einsatz klarwasserlöslicher, kationgruppenhaltiger Polymerer in neutraler bis schwachsaurer, wäßriger, flüssiger Formulierung, die bei Umgebungstemperaturen zur Bildung eines kontinuierlichen Films befähigt sind, zur termporären Beschichtung von Lackkabinen vor dem Beginn eines neuen Arbeitszyklus mit dem Ziel, die während des folgenden Arbeitszyklus aus dem Overspray gebildete Lackschicht durch Lösen der aus den erfindungsgemäßen Polymeren gebildeten Zwischenschicht leicht entfernen zu können.

R.S. Nickerson und B. Piel, Ann.Tech.Conf. Proc.-Am. Electroplat. Soc., 73rd Sess. A, Paper A2 beschreiben die für die Konzeption von Lackierkabinen relevanten Aspekte aus der Sicht des Anlagenherstellers.

Aus der US-PS 4 548 967 sind sogenannte temporäre Spray-Booth-Beschichtungen aus tensidhaltigen Polyvinylpyrrolidon/Sacchariden/Weichmacher-Mischungen bekannt.

Aus der US-PS 3 476 575 sind weiterhin heißwasserlösliche temporäre Spray-Booth-Beschichtungen aus tensidhaltigen Terpenkohlenwasserstoffgemischen bekannt.

Die DE-A-2 008 643 betrifft kationische, synthetische Lactices und ein Verfahren zu deren Herstellung. Diese Latices enthalten zwei verschiedene Arten von Polymereinheiten:
1) Polymereinheiten in Form eines quartären Stickstoffsalzes mindestens eines der folgenden basischen stickstoffhaltigen ethylenisch ungesättigten Monomeren: Arylvinylbenzylamine, Aminoalkylacrylester, Aminoalkylacrylamide, unsubstituierte oder substituierte Vinylpyridine und
2) Polymereinheiten mindestens eines der folgenden ungesättigten Monomeren: ethylenisch ungesättigte Monomere ohne basische Stickstoffatome und Monomere konjugierter Diene ohne basische Stickstoffatome,
wobei die Menge der Polymereinheiten gemäß 1) 0,5 bis 50 Gew.-%, bezogen auf das Gesamtgewicht des Monomeransatzes beträgt. Das im wesentlichen wasserunlösliche Mischpolymere wird durch Mischpolymerisation der unter 1) und 2) genannten Monomeren in wäßrigen Medium in Gegewart von Emulgiermitteln gewonnen. Das gebildete, wasserunlösliche Mischpolymer, das selbst keine kationischen Ladungen trägt, wird in wäßrigem Medium dispergiert. Es ist nur dann kationisch geladen, wenn geeignete Kationen bildenden Reagenzien zur Dispersion zugegeben und mit den dispergierten Mischpolymeren eingesetzt werden. Derartige wäßrige Dispersionen dienen zum Beschichten oder Imprägnieren von Stubstraten, wie Papier, Pulpe, regeneriertes Collagen, Asbest, Geweben oder Fasern.

In der EP-A-0 082 931 werden ferner leicht entfernbare Schutzüberzüge liefernde wäßrige Beschichtungsmittel auf Basis wäßriger Dispersionen bzw. Emulsionen von zur Salzbildung befähigten synthetischen Copolymerisaten beschrieben, die die folgenden wesentlichen Bestandteile enthalten: a) Bei Temperaturen von 5 °C und darüber filmbildende, zur Salzbildung befähigte Copolymerisate mit einem Gehalt an Säure- oder Aminogruppen, die als solche wasserunlöslich, in Salzform jedoch wasserlöslich sind und in wäßriger Dispersion bzw. Emulsion vorliegen. b) Mit Wasser nicht mischbare, bei Raumtempertur flüssige schwer flüchtige Nichtlöser für die Copolymerisate zu a). c) Nichtionogene Emulgatoren mit einem HLB-Wert <10 sowie d) gegebenenfalls weitere übliche Hilfs- und/oder Zusatzstoffe. Derartige Beschichtungsmittel werden verwendet zum temporären Oberflächenschutz insbesondere von metallischen und/oder lackierten Oberflächen, wie Automobilkarosserien und sonstigen Geräten, die in freier Atmosphäre gelagert werden, gegen klimatische und/oder mechanische Einflüsse.

Demgegenüber besteht die Aufgabe der vorliegenden Erfindung in der Bereitstellung eines zusammenhängende, flexible und wenig feuchtklimaempfindliche Schutzfilme bildenden Copolymers in neutraler, gegebenenfalls schwachsaurer wäßriger Lösung, das in obengenanntem Einsatz bei Bedarf durch Wasser leicht wieder entfernt werden kann.

Die Erfindung betrifft die Verwendung von Aminogruppen enthaltenden Copolymeren, erhalten durch Copolymerisation von, jeweils bezogen auf Copolymer,
a) 15 bis 90 Gew. -% eines stickstofffreien Monomeren oder mehrerer mit einer olefinischen Doppelbindung und
b) 85 bis 10 Gew. -% eines mindestens eine tertiäre Aminofunktion enthaltenden, linear polymerisierbaren Monomeren oder mehrerer, Diallylamin, 2-Vinylpyridin und/oder 4-Vinylpyridin,
wobei die Aminogruppen der Copolymeren gegebenenfalls vollständig oder teilweise neutralisiert oder quarterniert sind, in wäßriger klarwasserlöslicher Zubereitung als temporäre Beschichtung in Lackierkabinen.

Die erfindungsgemäß zu verwendenden, Aminogruppen enthaltenden Copolymere sind als solche als Überzugsmaterial für Tabletten aus der DE-A-2 135 073, auf deren Inhalt Bezug genommen wird, bekannt.

In einer bevorzugten Ausführungsform betrifft die vorliegende Erfindung die Verwendung von solchen Copolymeren, die erhältlich sind durch Copolymerisation von, jeweils bezogen auf Copolymer,
a) 15 bis weniger als 70 Gew.-% eines stickstofffreien Monomeren oder mehrerer mit einer olefinischen Doppelbindung und
b) 85 bis mehr als 30 Gew.-% eines mindestens eine tertiäre Aminofunktion enthaltenden, linear polymerisierbaren Monomeren oder mehreren, Diallylamin, 2-Vinylpyridin und/oder 4-Vinylpyridin,
wobei die Aminogruppen der Copolymeren gegebenenfalls vollständig oder teilweise neutralisiert oder quarterniert sind.

Als erfindungsgemäß einzusetzende stickstofffreie Monomere für die Herstellung der Aminogruppen enthaltenden Copolymere können insbesondere die folgenden genannt werden: alpha,beta-ungesättigte Mono- und Dicarbonsäuren, insbesondere Acrylsäure, Methacrylsäure, Crotonsäure, Itaconsäure, Maleinsäure und Fumarsäure einschließlich Estern derselben, z. B. Acrylsäurealkylester, Methacrylsäurealkylester, Hydroxyethylacrylat und -methacrylat, beta-Hydroxypropylacrylat und -methacrylat, beta-Hydroxybutylacrylat und -methacrylat, gamma-Hydroxybutylacrylat und -methacrylat, Glycerinmonoacrylat und -methacrylat, Ethylenglycolmonoacrylat und -methacrylat; weiterhin Vinylester, insbesondere Vinylacetat, und Vinylether sowie Styrol (gegebenenfalls in Mischung mit Butadien), alpha-Methylstyrol, Vinyltoluol und dergleichen. Besonders bevorzugte stickstofffreie Monomere sind Ester der Acryl- bzw. Methacrylsäure mit C₁-C₄-Monoalkoholen, z. B. die Methyl-, Ethyl-, Propyl- und Butylester, gegebenenfalls im Gemisch mit Acryl- und/oder Methacrylsäure. Die vorgenannten Monomeren können einzeln oder in Mischung eingesetzt werden.

Die erfindungsgemäß einzusetzenden, mindestens eine tertiäre Aminofunktion enthaltenden linear polymerisierbaren Monomeren sind dem Polymerfachmann geläufig. Typische Vertreter sind Dialkylaminoalkylester der Acryl-, Methacryl-, Malein-, Itacon- und Fumarsäure. Besonders bevorzugt sind Ester der Acryl- bzw. Methacrylsäure mit insbesondere eine tertiäre Aminofunktion aufweisenden C₂-C₆-Monoalkoholen wie Dimethylaminoethylacrylat und -methacrylat, Diethylaminoethylacrylat und -methacrylat, Dipropylaminoethylacrylat und -methacrylat, Dibutylaminoethylacrylat und -methacrylat, 2-(Dimethylamino)-propylacrylat und -methacrylat, 2-(Diethylamino)butylacrylat und -methylacrylat, Dimethylaminoneopentylacrylat und -methylacrylat und dergleichen. In gleicher Weise können auch die analogen Diethylaminoverbindungen verwendet werden. Weitere geeignete aminogruppenhaltige Monomere sind 2-Vinylpyridin oder 4-Vinylpyridin sowie die substituierten Diallylamine. Die vorgenannten Monomeren können einzeln oder in Mischung eingesetzt werden.

In Falle kleinerer Gewichtsmengen, z.B. weniger als 20 Gew.-%, an mindestens eine tertiäre Aminofunktion enthaltenden linear polymerisierbaren Monomeren wird der Fachmann, um gewünschtenfalls klarwasserlösliche Zubereitungen zu erhalten, die stickstofffreien Monomeren so auswählen, daß sie mindestens teilweise wasserlöslich sind. Ein mindestens teilweise wasserlösliches Comonomeres ist beispielsweise der Methylester der Acrylsäure (Methylacrylat). Auch die Auswahl der Monomeren zur Herstellung von vollkommen wasserlöslichen Comonomeren ist dem Fachmann geläufig.

Gemäß einer weiteren vorteilhaften Ausführungsform der Erfindung weisen die Aminogruppen enthaltenden Copolymere Glasübergangstemperaturen (Tg) von -30 bis +50 °C auf. Die Einstellung einer entsprechenden Glasübergangstemperatur durch Auswahl geeigneter Comonomerzusammensetzungen und/oder Polymerisationsbedingungen ist eine dem polymerfachmann geläufige Maßnahme.

Gemäß einer weiteren vorteilhaften Ausführungsform der Erfindung enthalten die wäßrigen klarwasserlöslichen Zubereitungen die Aminogruppen enthaltenden Copolymere in einer Menge von 5 bis 75, insbesondere 15 bis 50 Gew.-%, bezogen auf das Gesamtgewicht der Zubereitung. Für die Anwendung vor Ort können diese auf sehr geringe Konzentrationen verdünnt werden. Die gewollte Schichtdicke bei der geschichtung der Lackierkabine bestimmt die Konzentration der Comonomeren in der wäßrigen Zubereitung, die gegebenenfalls 1 Gew.-%, bezogen auf das Gesamtgewicht der Zubereitung, betragen kann.

Klarwasserlösliche Zubereitungen können erhalten werden, indem man einer wäßrigen Dispersion der Copolymeren soviel einer Säure zusetzt und dabei die Copolymeren neutral stellt, d.h. die Aminogruppen derselben neutralisiert, bis sich gerade eine klare Zubereitung ergibt. Die Menge der hierzu erforderlichen Säure hängt von der Art und der Zusammensetzung des Copolymeren ab. Die klare Phase stellt sich im allgemeinen bereits dann ein, wenn nur ein Teil der Aminofunktion neutralisiert ist; es ist selbstverständlich jedoch auch möglich, sämtliche Aminofunktionen zu neutralisieren.

Für die Neutralisation eignen sich die üblichen, physiologisch unbedenklichen, anorganischen und/oder organischen Säuren wie Schwefelsaure, Salzsäure, Phosphorsäure, Ameisensäure, Essigsäure und dergleichen. Besonders bevorzugt sind Phosphorsäure sowie Ameisensäure und/oder Essigsäure.

Anstelle der Neutralisation mit Säuren kann man auch die Aminogruppen der Copolymere zum Erhalt klarwasserlöslicher, wäßriger Zubereitungen mit üblichen Alkylierungsmitteln, insbesondere Methyljodid, quarternieren.

In einer weiteren bevorzugten Ausführungsform der vorliegenden Erfindung sind die Copolymeren vollständig oder teilweise unter Verwendung von Phosphorsäure quarterniert. Diese Neutralisation bewirkt einen außerordentlich korrosionshemmenden Effekt der wäßrigen Zubereitungen.

Für die Zubereitungen der Erfindung kann es erwünscht sein, eine möglichst geringe Viskosität einzustellen. Dem Fachmann stehen hierzu mehrere Möglichkeiten zur Verfügung. So kann man z. B. beim Aufbau der Copolymeren geringe Mengen an Reglern zusetzen. Geeignete Regler sind Thioglycolsäure oder Mercaptoethanol sowie allgemein ionische Vernetzungsmittel wie mehrfunktionelle Carbonsäuren, beispielsweise Dicarbonsäuren mit 2 bis 10 C-Atomen. Der Anteil der Regler sollte 2 % nicht übersteigen. In vielen Fällen sind Zusätze von 0,5 oder 0,1 % und manchmal sogar noch geringere Mengen zur Verringerung der Viskosität ausreichend. Es ist lediglich zu beachten, daß erhöhte Mengen an Reglern die Haftfähigkeit beeinträchtigen können.

Die wäßrigen Zubereitungen der Erfindung können weiterhin übliche Zusätze wie Konservierungsmittel, Farbstoffe und dergleichen enthalten.

Die Herstellung der wäßrigen Zubereitungen der Erfindung kann mittels an sich bekannter Methoden erfolgen. Es ist lediglich darauf zu achten, daß das Molekulargewicht der Copolymeren 10.000, vorzugsweise 30.000, nicht unterschreitet, da sonst die Hafteigenschaften beeinträchtigt werden könnten.

Die Herstellung der wäßrigen Zubereitungen der Erfindung erfolgt beispielsweise durch Polymerisation in wäßriger Lösung vor oder nach der Zugabe des Neutralisations- oder Quarternierungsmittels. Sollten die Comonomeren der wäßrigen Monomerlösung nicht löslich sein, so kann auch nach Art einer Fällungspolymerisation in einem Nichtlösungsmittel gearbeitet werden; das durch Fällungspolymerisation gewonnene Material kann anschließend in wäßriger Lösung, die das Neutralisations- oder Quarternierungsmittel enthalten kann, gelöst werden. Neutralisations- oder Quarternierungsmittel können bei der Polymerisation in wäßriger Lösung von Anfang an zugegen sein, sie können jedoch auch erst zum Ende der Polymerisation zugegeben werden.

Bei einem hohen Gehalt an nicht wasserlöslichen Comonomeren kann darüber hinaus auch eine Emulsionspolymerisation durchgeführt werden, wobei anschließend durch Neutralisation oder Quarternierung die wäßrigen Zubereitungen hergestellt werden. Bei der Emulsionspolymerisation kann es zweckmäßig sein, Substanzen zuzusetzen, die zu einer Verringerung der Viskosität führen. Im übrigen können auch Molekulargewichtsregler zugegeben werden, um ein zu hohes Molekulargewicht, z.B. von mehr als 1.000.000, zu verhindern.

Die Erfindung wird im folgenden anhand bevorzugter Ausführungsbeispiele naher erläutert.

### Ausführungsbeispiele

### Beispiel 1:

Es wurde eine wäßrige Beschichtungszubereitung mit einem Copolymer (Glasübergangstemperatur: ca. 15 °C), gemäß der folgenden Rezeptur hergestellt:

### Vorlagelösung

41,8 Gew.-Teile Wasser
0,1 Gew.-Teile Katalysator (2,2'-Azobis(2-amidinopropan)-dihydrochlorid)

### Zulauflösung 1

16,9 Gew.-Teile Dimethylaminoethylmethacrylat
16,9 Gew.-Teile Methylmethacrylat

### Zulauflösung 2

0,2 Gew.-Teile Katalysator (wie oben)
2,0 Gew.-Teile Wasser

### Neutralisationslösung

15,8 Gew.-Teile Wasser
ca. 6,3 Gew.-Teile Phosphorsäure, (85 %-ig)
c̅a̅.̅ 1̅0̅0̅ G̅e̅w̅.̅-̅T̅e̅i̅l̅e̅ ca. 40 %-ige wäßrige Polymerlösung.

Die Herstellung erfolgte in einem Reaktionsgefäß mit Rührer, Heizung, Kühlung, Rückflußkühler, Temperaturmessung und zwei Zulaufgefäßen. Dabei wurde zunächst im Reaktionsgefäß die Vorlagelösung aus Wasser und Katalysator hergestellt. Die Zulauflösungen 1 bzw. 2 wurden in die getrennten Zulaufgefäße gegeben. Die Vorlagelösung wurde unter Rühren auf 75 °C erwärmt. Anschließend wurden beide Zulauflösungen innerhalb von 90 min parallel zugegeben, wobei die Temperatur bis 85 °C anstieg. Nach beendetem Zulauf wurde das Reaktionsgemisch 60 min bei 80 °C gerührt. Die Dispersion wurde nach Abkühlen auf weniger als 45 °C mit der Neutralisationslösung auf einen pH-Wert von etwa 5,5 eingestellt.

Das Reaktionsprodukt wurde in Form einer klaren Lösung und einer Brookfield-Viskosität von mehr als 5 Pas (Spindel 4, 20 Upm) erhalten; der Trockenrückstand betrug 40 % (bestimmt durch Eindampfen an Ölpumpenvakuum bei 80 °C).

Bei der Ermittlung der Hafteigenschaften wurden die folgenden Ergebnisse erhalten:

### Ausführung (Beschichtung)

Die nachfolgende Untersuchung wurde mit einer 20 Gew.-%-igen wäßrigen Lösung des in Beispiel 1 genannten Comonomeren durchgeführt.

Die trübe gelbliche Flüssigkeit wies einen pH-Wert von 5,4 ± 1 auf. Die Dichte (20 °C) betrug 1,056 ± 0,1. Die Viskosität (Ford-Becher, 4 mm-Düse) betrug 24 sec ± 2. Der chemische Sauerstoffbedarf (CSB-Wert, Dr. Lange-Küvettentest) betrug 357 g O₂/l1. Der Flammpunkt (Abel-Pensky) wurde zu mehr als 100 °C bestimmt. Zur Beschichtung wurde a) eine Glasplatte und b) ein lackiertes Stahlblech mittels einer Lackspritzpistole mit einer 10 bis 20 µm dicken Beschichtung versehen.

Bei Raumtemperatur wurde die Coconnage auf beiden Untergründen 15 bis 20 min trocknen gelassen. Es verblieb ein transparenter, harter Film.

Das Ablösen der applizierten Coconnage wurde mit Wasser bei Raumtemperatur (Handdusche, 2 bis 3 bar) durchgeführt. Nach weniger als 1 min war der gesamte Film abgelöst.

Der CSB-Wert des Spülwassers (Dr. Lange-Küvettentest mit 20 g der erfindungsgemäßen Copolymerlösung und 10 l Stadtwasser) betrug 433 mg O₂/l.

### Beispiel 2:

Unter Verwendung der Monomerbausteine aus 70 Gew.-% Ethylacrylat (EA) und 30 Gew.-% Dimethylaminoethylmethacrylat (DMAEM) wurde analog Beispiel 1 eine 35 Gew.-%ige wäßrige Zubereitung mit Schwefelsäure neutralisiert.

### Beispiel 3:

Unter Verwendung von 70 Gew.-% Dimethylaminopropylmethacrylamid (DMAPMA) und 30 % Gew.-% Ethylacrylat (EA) wurde analog Beispiel 1 eine 30 Gew.-%ige wäßrige Zubereitung mit Eisessig neutralisiert.

### Beispiel 4:

Unter Verwendung von 85 Gew.-% Dimethylaminopropylmethacrylamid (DMAPMA) und 15 Gew.-% Butylacrylat (BuA) wurde analog Beispiel 1 eine 30 Gew.-%-ige wäßrige Zubereitung mit Ameisensäure/Phosphorsäure (2 : 5 Gew.-Teile) neutralisiert.

### Beispiel 5:

Unter Verwendung von 80 Gew.-% Dimethylaminoethylmethacrylat (DMAEM) und 20 Gew.-% Methylmethacrylat (MMA) wurde analog Beispiel 1 eine 35 Gew.-%-ige wäßrige Zubereitung mit Ameisensäure neutralisiert.

### Beispiel 6:

Unter Verwendung von 40 Gew.-% Dimethylaminoethylmethacrylat (DMAEM), 20 Gew.-% Methylmethacrylat (MMA), 20 Gew.-% Ethylacrylat (EA) und
20 Gew.-% Butylacrylat (BuA) wurde analog Beispiel 1 eine 40 Gew.-%-ige wäßrige Zubereitung mit Phosphorsäure neutralisiert.

Die Zubereitungen gemäß den Beispielen 2 bis 6 wurden analog Beispiel 1 bei der Beschichtung von Oberflächen untersucht. Die gefundenen Ergebnisse des Beispiels 1 konnten mit den Monomerbausteinen der Beispiele 2 bis 6 bestätigt werden.

## Patentansprüche

1. Verwendung von Aminogruppen enthaltenden Copolymeren, erhalten durch Copolymerisation von, jeweils bezogen auf Copolymer,
a) 15 bis 90 Gew.-% eines stickstofffreien Monomeren oder mehrerer mit einer olefinischen Doppelbindung und
b) 85 bis 10 Gew.-% eines mindestens eine tertiäre Aminofunktion enthaltenden, linear polymerisierbaren Monomeren oder mehrerer, Diallylamin, 2-Vinylpyridin und/oder 4-Vinylpyridin,
wobei die Aminogruppen der Copolymeren gegebenenfalls vollständig oder teilweise neutralisiert oder quarterniert sind, in wäßriger, klarwasserlöslicher Zubereitung als temporäre Beschichtung in Lakkierkabinen.

2. Verwendung nach Anspruch 1, dadurch gekennzeichnet, daß die Copolymeren erhältlich sind durch Copolymerisation von, jeweils bezogen auf Copolymer,
a) 15 bis weniger als 70 Gew.-% eines stickstofffreien Monomeren oder mehrerer mit einer olefinischen Doppelbindung und
b) 85 bis mehr als 30 Gew.-% eines mindestens eine tertiäre Aminofunktion enthaltenden, linear polymerisierbaren Monomeren oder mehreren, Diallylamin, 2-Vinylpyridin und/oder 4-Vinylpyridin,
wobei die Aminogruppen der Copolymeren gegebenenfalls vollständig oder teilweise neutralisiert oder quarterniert sind.

3. Verwendung nach Anspruch 1 oder 2, dadurch gekennzeichnet, daß die stickstofffreien Monomere Ester der Acryl- bzw. Methacrylsäure mit C₁-C₄-Monoalkanolen, gegebenenfalls im Gemisch mit Acryl- und/oder Methacrylsäure, sind.

4. Verwendung nach Anspruch 1 oder 2, dadurch gekennzeichnet, daß die Aminogruppen enthaltenden Monomere Ester der Acryl- bzw. Methacrylsäure mit tertiäre Aminofunktionen aufweisenden C₂-C₆-Monoalkanolen und/oder Diethylaminoverbindungen sind.

5. Verwendung nach mindestens einem der Ansprüche 1 bis 4, dadurch gekennzeichnet, daß die Aminogruppen enthaltenden Copolymeren Glasübergangstemperaturen von -30 °C bis +50 °C aufweisen.

6. Verwendung nach mindestens einem der Ansprüche 1 bis 5, dadurch gekennzeichnet, daß die wäßrigen, klarwasserlöslichen Zubereitungen die Aminogruppen enthaltenden Copolymere in einer Menge von 5 bis 75, insbesondere 15 bis 50 Gew.-%, bezogen auf das Gesamtgewicht der Zubereitung, enthalten.

7. Verwendung nach mindestens einem der Ansprüche 1 bis 6, dadurch gekennzeichnet, daß die Aminogruppen der Copolymere bis zum Erreichen einer klaren, klarwasserlöslichen Zubereitung in Wasser neutralisiert bzw. quarterniert sind.

8. Verwendung nach Anspruch 7, dadurch gekennzeichnet, daß man mit Phosphorsäure neutralisiert.

## Claims

1. The use of aminofunctional copolymers obtained by copolymerization of - based on copolymer -
a) 15 to 90% by weight of one or more nitrogen-free monomers containing an olefinic double bond and
b) 85 to 10% by weight of one or more linearly polymerizable monomers containing at least one tertiary amino function, diallyl amine, 2-vinyl pyridine and/or 4-vinyl pyridine,
the amino groups of the copolymers optionally being completely or partly neutralized or quaternized,
in the form of a clearly water-soluble preparation as a temporary coating in lacquering cabins.

2. The use claimed in claim 1, characterized in that the copolymers are obtained by copolymerization of - based on copolymer -
a) 15 to less than 70% by weight of one or more nitrogen-free monomers containing an olefinic double bond and
b) 85 to more than 30% by weight of one or more linearly polymerizable monomers containing at least one tertiary amino function, diallyl amine, 2-vinyl pyridine and/or 4-vinyl pyridine,
the amino groups of the copolymers optionally being completely or partly neutralized or quaternized.

3. The use claimed in claim 1 or 2, characterized in that the nitrogen-free monomers are esters of acrylic or methacrylic acid with C₁₋₄ monoalkanols, optionally in admixture with acrylic and/or methacrylic acid.

4. The use claimed in claim 1 or 2, characterized in that the aminofunctional monomers are esters of acrylic or methacrylic acid with C₂₋₆ monoalkanols containing tertiary amino functions and/or diethylamino compounds.

5. The use claimed in at least one of claims 1 to 4, characterized in that the aminofunctional copolymers have glass transition temperatures of -30 to +50°C.

6. The use claimed in at least one of claims 1 to 5, characterized in that the aqueous, clearly water-soluble preparations contain the aminofunctional copolymers in a quantity of 5 to 75% by weight and more particularly 15 to 50% by weight, based on the total weight of the preparation.

7. The use claimed in at least one of claims 1 to 6, characterized in that the amino groups of the copolymers are neutralized or quaternized until a clear, clearly water-soluble aqueous preparation is obtained.

8. The use claimed in claim 7, characterized in that phosphoric acid is used for neutralization.

## Revendications

1. Utilisation de copolymères contenant des groupes amino obtenus par copolymérisation de, chaque fois rapporté au copolymère,
a) 15 à 90 % en poids d'un monomère exempt d'azote ou plus avec une double liaison oléfinique et
b) 85 à 10 % en poids d'au moins un ou plusieurs monomères polymérisables en ligne, comprenant au moins une fonction amino tertiaire, diallylamine, 2-vinylpyridine et/ou 4-vinylpyridine, les groupes amino des copolymères étant le cas échéant entièrement ou partiellement neutralisés ou quaternisés, dans une préparation soluble dans l'eau, comme revêtement temporaire des cabines de peinture.

2. Utilisation selon la revendication 1, caractérisée en ce que les copolymères sont obtenus par copolymérisation de, chaque fois rapporté au copolymère,
a) 15 à 90 % en poids d'un monomère exempt d'azote ou plus avec une double liaison oléfinique et
b) 85 à 10 % en poids d'au moins un ou plusieurs monomères polymérisables en ligne, comprenant au moins une fonction amino tertiaire, diallylamine, 2-vinylpyridine et/ou 4-vinylpyridine, les groupes amino des copolymères étant le cas échéant entièrement ou partiellement neutralisés ou quaternisés.

3. Utilisation selon la revendication 1 ou 2, caractérisée en ce que les monomères exempts d'azote sont les esters d'acide acrylique ou méthacrylique avec des monoalcools en C₁-C₄, le cas échéant en mélange avec de l'acide acrylique ou de méthacrylique.

4. Utilisation selon la revendication 1 ou 2, caractérisée en ce que les monomères contenant des groupes amino sont des esters d'acide acrylique ou méthacrylique et de monoalcools C₂-C₆ présentant des fonctions amino tertiaires et/ou des composés diéthylamino.

5. Utilisation selon au moins l'une des revendications 1 à 4, caractérisée en ce que les copolymères comprenant des groupes amino présentent des températures de transition vitreuse de -30°C à +50°C.

6. Utilisation selon au moins l'une des revendications 1 à 5, caractérisée en ce que les préparations aqueuses solubles dans l'eau contiennent des copolymères comprenant des groupes amino à une concentration de 5 à 75, notamment 15 à 50 % en poids, par rapport au poids total de la préparation.

7. Utilisation selon au moins l'une des revendications 1 à 6, caractérisée en ce qu'on neutralise ou quaternise les groupes amino des copolymères jusqu'à l'obtention d'une préparation soluble dans l'eau et transparente.

8. Utilisation selon la revendication 7, caractérisée en ce qu'on effectue la neutralisation avec de l'acide phosphorique.
